# NEUE EUROPÄISCHE PATENTSCHRIFT

(11) **EP 1 926 642 B2**
(45) Veröffentlichungstag und Bekanntmachung des Hinweises auf die Entscheidung über den Einspruch: **22.03.2017**
(45) Hinweis auf die Patenterteilung: 07.01.2009
(21) Anmeldenummer: 06791852.4
(22) Anmeldetag: 06.09.2006
(51) Int. Cl.: B60T 7/04, B60T 7/10, B60T 13/66

(54) **VORRICHTUNG UND VERFAHREN ZUM STEUERN EINER ELEKTRISCHEN FESTSTELLBREMSE EINES NUTZFAHRZEUGS**
DEVICE AND METHOD FOR CONTROLLING AN ELECTRIC PARKING BRAKE OF A UTILITY VEHICLE
PROCEDE ET DISPOSITIF POUR COMMANDER UN FREIN DE STATIONNEMENT ELECTRIQUE SUR UN VEHICULE UTILITAIRE

(30) Priorität: 06.09.2005 DE 102005042304
(43) Veröffentlichungstag der Anmeldung: 04.06.2008
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schumacher & Willsau
(86) Internationale Anmeldenummer: PCT/EP2006/008661
(87) Internationale Veröffentlichungsnummer: WO 2007/028579

(56) Entgegenhaltungen:
- EP-B1- 1 038 212
- WO-A1-02/46014
- DE-A1- 3 926 178
- DE-A1- 10 333 966
- DE-A1- 10 353 056
- DE-A1-102005 002 679
- DE-B3- 10 330 451
- DE-C1- 19 715 880

## Beschreibung

Die Erfindung betrifft eine Vorrichtung zum Steuern einer elektrischen Feststellbremse eines Nutzfahrzeugs mit einer elektronischen Steuereinheit und einer mit der elektronischen Steuereinheit kommunizierenden Handsteuereinheit, über die von der Betätigungsart der Handsteuereinheit abhängige Fahrerwünsche an die elektronische Steuereinheit übermittelbar sind, wobei die elektronische Steuereinheit in der Weise ausgebildet ist, dass sie Signale der Handsteuereinheit weiterverarbeitet, wenn die Zündung des Nutzfahrzeugs eingeschaltet ist.

Die Erfindung betrifft weiterhin ein Verfahren zum Steuern einer elektrischen Feststellbremse eines Nutzfahrzeugs mit einer elektronischen Steuereinheit und einer mit der elektronischen Steuereinheit kommunizierenden Handsteuereinheit, über die von der Betätigungsart der Handsteuereinheit abhängige Fahrerwunsch an die elektronische Steuereinheit dann übermittelt werden, wenn die Zündung des Nutzfahrzeugs eingeschaltet ist.

Derartige Vorrichtungen und Verfahren erlangen im Zusammenhang mit dem Betrieb von Nutzfahrzeugen zunehmend Bedeutung. Bezüglich der Weiterentwicklung der Systeme stehen verschiedene Gesichtspunkte im Vordergrund, insbesondere der Bedienkomfort und die Sicherheit.

Aus der DE 103 53 056 A1 ist eine Handsteuereinheit bekannt, bei der großen Wert auf die genannten Aspekte gelegt wird. Im Hinblick auf die Sicherheit wird insbesondere vorgeschlagen, dass ein Lösen der elektrischen Feststellbremse nur möglich ist, wenn zwei Betätigungselemente, das heißt nicht nur ein Betätigungselement, betätigt werden. Weiterhin werden die einzelnen von den Bedienelementen betätigten Schalter in der Handsteuereinheit redundant ausgelegt. Weiterhin wird auch die Möglichkeit erwähnt, über die Handsteuereinheit eine Testfunktion zu initiierten, nämlich das Lösen der Bremsen eines Anhängers, um so zu ermitteln, ob die Feststellbremsanlage des Zugfahrzeugs alleine in der Lage ist, den gesamten Zug zu halten. Die Nutzung dieser Testfunktion ist dem Fahrzeugführer insbesondere dann angeraten, wenn er das Fahrzeug am Berg abstellt.

Da eine elektrische Feststellbremse von einer elektronischen Steuereinheit angesteuert wird, ist es für die Ausführung von Funktionen im Allgemeinen erforderlich, dass die Zündung des Nutzfahrzeugs eingeschaltet ist. Dies ist im Hinblick auf die Sicherheit des Nutzfahrzeugs zu begrüßen, da auf diese Weise keine unbeabsichtigten Aktionen bei ausgeschalteter Zündung, insbesondere ein Lösen, veranlasst werden können. Im Hinblick auf den Bedienkomfort ist das bisherige Konzept jedoch verbesserungsfähig. Vergisst der Fahrer nämlich während der Einschaltzeit der Zündung die zu schließende Feststellbremse, so ist ihm das Schließen nachträglich bei ausgeschalteter Zündung nicht mehr möglich. Er muss erst die Zündung wieder einschalten, um die gewünschte Aktion durchzuführen.

Dokument DE-A-103 33966 offenbart die merkmale des oberbegriffs des Anspruchs 1 und des Anspruchs 7.

Der Erfindung liegt die Aufgabe zugrunde, eine sichere Lösung im Hinblick auf die Steuerung einer elektronischen Feststellbremse zur Verfügung zu stellen, die einen verbesserten Bedienkomfort mit sich bringt, insbesondere im Hinblick auf die Abhängigkeit der Umsetzung von Fahrerwünschen von dem eingeschalteten Zustand der Zündung.

Diese Aufgabe wird mit den Merkmalen der unabhängigen Ansprüche gelöst.

Vorteilhafte Ausführungsformen der Erfindung sind in den abhängigen Ansprüchen angegeben.

Erfindungsgemäß ist vorgesehen, dass die Handsteuereinheit in der Weise ausgebildet ist, dass sie bei mindestens einer Betätigungsart ein Aufwecksignal an die elektronische Steuereinheit ausgibt, und dass die elektronische Steuereinheit weiterhin in der Weise ausgebildet ist, dass sie im Anschluss an den Empfang eines Aufwecksignals mindestens ein weiteres Signal der Handsteuereinheit auch dann weiterverarbeitet, wenn die Zündung des Nutzfahrzeugs ausgeschaltet ist. Es ist somit möglich, die Spannungsversorgung der elektronischen Steuereinheit mit ausgeschalteter Zündung zu unterbrechen. Dies ist im Hinblick auf den elektrischen Energiehaushalt des Nutzfahrtzeugs nützlich und weiterhin auch sicherheitstechnisch sinnvoll, denn es wird bei ausgeschalteter Zündung normalerweise nicht zu unbeabsichtigten Aktionen kommen. Allerdings kann vorgesehen sein, dass über die Handsteuereinheit ein Aufwecksignal ausgegeben werden kann, auf dessen Grundlage dann trotz ausgeschalteter Zündung eine Bedienung der Feststellbremse möglich ist.

Dies ist insbesondere in dem Zusammenhang nützlich, dass die Handsteuereinheit in der Weise ausgebildet ist, dass sie ein Aufwecksignal ausgibt, wenn an der Handsteuereinheit ein Betätigungselement zum Schließen der Feststellbremse betätigt wird. Der Fahrer kann somit nach dem Ausschalten der Zündung ohne weitere Vorkehrungen noch die Feststellbremse schließen, indem er nämlich die Handsteuereinheit in herkömmlicher Weise betätigt, das heißt in der Weise, wie er sie auch bei eingeschalteter Zündung zum Schließen der Feststellbremse bedient. Bei diesem Bedienvorgang wird automatisch ein Aufwecksignal ausgegeben, dass eine nachfolgende Verarbeitung eines Schließsignals durch die elektronische Steuereinheit ermöglicht. Unter bestimmten Umständen kann es aber auch erwünscht sein, die erfindungsgemäße Vorrichtung in der Weise auszulegen, dass trotz ausgeschalteter Zündung ein Lösen der Feststellbremse ermöglicht ist. In diesem Fall wird die Ausgabe des Aufwecksignals an das Betätigen des Betätigungselementes für das Lösen der Feststellbremse gekoppelt. Dies kann insbesondere in Nutzfahrzeugen für die Personenbeförderung nützlich sein, denkt man beispielsweise an die Situation, dass ein Fahrzeug auf einem Bahnübergang zum Stehen kommt. Es ist dann von großem Vorteil, wenn man unabhängig vom Einschaltzustand der Zündung oder von dem Anliegen der Zündspannung an der elektronischen Steuereinheit ein Lösen der Feststellbremse veranlassen kann. Koppelt man die Ausgabe des Aufwecksignals aber an die Ausgabe des Lösesignals, so sind weitere Sicherheitsmaßnahmen zu ergreifen, um nicht doch ein unbeabsichtigtes Lösen der Feststellbremse zu ermöglichen.

Es ist insbesondere nützlich, dass die elektronische Steuereinheit in der Weise ausgebildet ist, dass sie bei ausgeschalteter Zündung des Nutzfahrzeugs im Anschluss an den Empfang eines Aufwecksignals genau ein weiteres Signal der Handsteuereinheit weiterverarbeitet. Für den Hauptfall, auf den die vorliegende Erfindung ausgelegt ist, dass nämlich die Zündung ausgeschaltet wird, bevor die Feststellbremse geschlossen ist, reicht es aus, die Weiterverarbeitung eines einzigen weiteren Signals nach dem Empfang des Aufwecksignals durch die elektronische Steuerung zuzulassen. Da nach der Weiterverarbeitung des einen weiteren Signals, die Feststellbremse geschlossen wird, das Fahrzeug somit in einen sicheren Zustand gebracht wird, ist eine weitere Signalverarbeitung überflüssig und aus sicherheitstechnischen Erwägungen unerwünscht.

Bei der erfindungsgemäß Vorrichtung ist weiterhen vorgesehen, dass das Aufwecksignal einem Mikrocontroller über eine Analog-Digital-Wandler und einer Schaltlogik zuführbar ist, dass die elektronische Steuerung in der Weise ausgelegt ist, dass der Schaltlogik neben dem Aufwecksignal ein "Zündung-Ein"-Signal zuführbar ist und dass ein Ausgangssignal der Schaltlogik dann ein Schließen eines Schalters zur Spannungsversorgung des Mikrocontrollers veranlasst, wenn das Aufwecksignal und/oder das "Zündung-Ein"-Signal zugeführt werden. Durch die schaltungstechnische Auslegung der vorliegenden Erfindung werden das Aufwecksignal und das "Zündung-Ein"-Signal im Hinblick auf die Schaltlogik gleichberechtigt behandelt. Da der Mikrocontroller jedoch ebenfalls vom Vorliegen des Aufwecksignals Kenntnis erlangt, kann die elektronische Steuerung letztlich in Kenntnis des Vorliegens dieses Aufwecksignals im Sinne der vorliegenden Erfindung arbeiten, das heißt beispielsweise sofort nach dem Durchführen des Schließvorgangs der Feststellbremse wieder in ihren spannungslosen Zustand übergehen. Bei geeigneter Zuführung des Aufwecksignals zu dem Schalter zur Spannungsversorgung des Mikrocontrollers kann aber auch unabhängig von dem Mikrocontroller sichergestellt werden, dass nur ein begrenztes Zeitfenster nach der Ausgabe des Aufwecksignals zur Verfügung steht, um die weitere Funktion, das heißt insbesondere die Schließfunktion, zu veranlassen.

Im Zusammenhang mit dem erwähnten Schalter zur Spannungsversorgung ist weiterhin vorgesehen, dass ein Schließen des Schalters zur Spannungsversorgung des Mikrocontrollers auch in Folge eines Ausgangssignals des Mikrocontrollers veranlassbar ist. Dieses Ausgangssignal des Mikrocontrollers betrifft insbesondere einen Nachlauf des Steuergerätes, womit es möglich ist, in bestimmten Situationen auch nach dem Ausschalten der Zündung gewisse Funktionen durchzuführen oder zu unterbinden. Beispielsweise kann das Schließen der Feststellbremse unabhängig von dem Vorliegen des Aufwecksignals über einige Sekunden nach dem Ausschalten der Zündung noch erlaubt sein.

Bei dem erfindungsgemäßen Verfahren ist vorgesehen, dass die Handsteuereinheit bei mindestens einer Betätigungsart ein Aufwecksignal an die elektronische Steuereinheit ausgibt und dass die elektronische Steuereinheit weiterhin im Anschluss an den Empfang eines Aufwecksignals mindestens ein weiteres Signal der Handsteuereinheit auch dann weiterverarbeitet, wenn die Zündung des Nutzfahrzeugs ausgeschaltet ist. Hierdurch werden die Vorteile und Besonderheiten der erfindungsgemäßen Vorrichtung auch im Rahmen eines Verfahrens umgesetzt.

Dieses ist in besonders vorteilhafter Weise dadurch weitergebildet, dass die Handsteuereinheit ein Aufwecksignal ausgibt, wenn an der Handsteuereinheit ein Betätigungselement zum Schließen der Feststellbremse betätigt wird.

Weiterhin kann vorgesehen sein, dass die elektronische Steuereinheit bei ausgeschalteter Zündung des Nutzfahrzeugs im Anschluss an den Empfang eines Aufwecksignals genau ein weiteres Signal der Handsteuereinheit weiterverarbeitet.

Die Erfindung kommt in besonders nützlicher Weise dadurch zum Einsatz, dass das weitere Signal ein Schließsignal zum Schließen der Feststellbremse ist.

Bei dem erfindugsgemäßen Verfahren ist weiterhin vorgesehen, dass das Aufwecksignal einem Mikrocontroller über eine Analog-Digital-Wandler und einer Schaltlogik zugeführt wird, dass der Schaltlogik neben dem Aufwecksignal ein "Zündung-Ein"-Signal zugeführt wird und dass ein Ausgangssignal der Schaltlogik dann ein Schließen eines Schalters zur Spannungsversorgung des Mikrocontrollers veranlasst, wenn das Aufwecksignal und/oder das "Zündung-Ein"-Signal zugeführt werden.

Weiterhin ist auch vorgesehen, dass ein Schließen des Schalters zur Spannungsversorgung des Mikrocontrollers in Folge eines Ausgangssignals des Mikrocontrollers veranlasst wird.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm zur Erläuterung einer erfindungsgemäßen Vorrichtung mit einer schematischen Darstellung einer ersten Ausführungsform einer Betätigungsvorrichtung eines Handsteuereinheit;
- Figur 2: eine zweite Ausführungsform einer Betätigungsvorrichtung für eine Handsteuereinheit;
- Figur 3: eine dritte Ausführungsform einer Betätigungsvorrichtung für eine Handsteuereinheit; und
- Figur 4: eine schematische Darstellung zur Erläuterung einer Handsteuereinheit, die im Rahmen der vorliegenden Erfindung zum Einsatz kommen kann.

Bei der nachfolgenden Beschreibung der bevorzugten Ausführungsformen der Erfindung bezeichnen gleiche Bezugszeichen gleiche oder vergleichbare Komponenten.

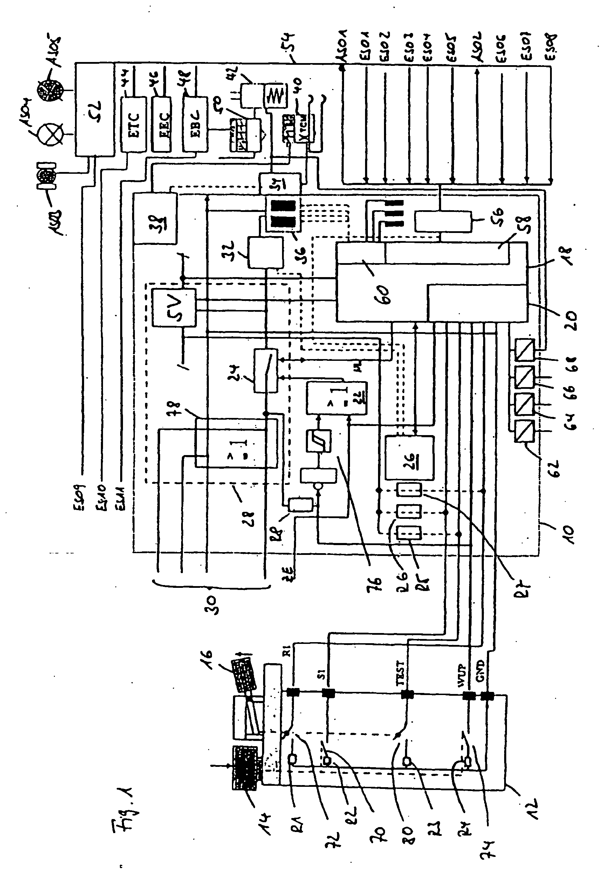

Figur 1 zeigt ein Schaltungsdiagramm zur Erläuterung einer erfindungsgemäßen Vorrichtung mit einer schematischen Darstellung einer ersten Ausführungsform einer Betätigungsvorrichtung einer Handsteuereinheit. Es ist eine elektronische Steuereinheit 10 dargestellt. Diese enthält einen Mikrocontroller 18 und einen Watchdogtimer 26 Der Watchdogtimer 26 dient der Überwachung des Mikrocontrollers 18, und er enthält zu diesem Zweck einen zweiten Mikrocontroller. Aufgrund der Anwesenheit von zwei Mikrocontrollern kann Redundanz zur Verfügung gestellt werden.

Es ist weiterhin ein Netzteil 28 vorgesehen dem Spannung aus einer doppelten, das heißt redundanten, Spannungsversorgung zugeführt werden kann. Das Netzteil 28 liefert insbesondere dem Mikrocontroller 18 eine stabile Spannung von vorzugsweise 5 V. es ist weiterhin ein Shut-Down-Relais 32 vorgesehen, welches, veranlasst von dem Watchdogtimer 26, die Anlage in einen sicheren Zustand überführen kann, insbesondere die die Schaltfunktionen der Feststellbremsenpneumatik 34 vermittelnden Magnetventile 36.

Es sind weiterhin eine EAC-Pneumatikschnittstelle 38 (EAC = elektronische Luftaufbereitungsanlage) sowie Einrichtungen in der Peripherie der elektronischen Steuereinheit 10 dargestellt. Beispielsweise ist die EAC-Pneumatikschnittstelle 28, neben ihrer Verbindung mit der Feststellbremsenpneumatik 34, auch mit dem Anhängersteuermodul 40 verbunden. Das Anhängersteuermodul 40 steht auch mit der Feststellbremsepneumatik 34 in Verbindung, insbesondere zur Realisierung einer nachfolgend noch zu beschreibenden Testsfunktion. Eine weitere Verbindung der Feststellbremsenpneumatik 34 besteht zu den Federspeicherzylindern 42 der Feststellbremse, von denen einer stellvertretend dargestellt ist. Weitere periphere Komponenten sind eine elektronische Getriebesteuerung (ETC) 44, eine elektronische Motorsteuerung (EEC) 46 und eine elektronische Bremssteuerung (EBC) 48. Die elektronische Bremssteuerung 48 steht mit einem Modulator 50 in Verbindung, über den der Druck in den Federspeicherzylindern 42 veränderbar ist. Weiterhin ist eine zentrale elektronische Steuereinheit 52 vorgesehen, die auch im Rahmen eines Fahrzeugsführungsrechners beziehungsweise eines zentralen Bordrechners realisiert sein kann. Die zentrale elektronische Steuerung 52 empfängt beispielsweise Signale ES09, die den Zustand der Türen und die Sitzbelegung kennzeichnen. Im Zusammenhang mit der vorliegenden Erfindung relevante Ausgangssignale sind beispielsweise ein Parksignal AS03, ein Warn- beziehungsweise Fehlersignal AS04 und ein Stoppsignal AS05, das beispielsweise bei angezogener Handbremse während des Stop-and-Go-Betriebs ausgegeben wird. Die elektronische Getriebesteuerung 44 empfängt beispielsweise Signale ES10, die den Getriebe- und Kupplungszustand, den eingelegten Gang und die Kardandrehzahl kennzeichnen. Die elektronische Bremssteuerung 48 empfängt beispielsweise Signale ES11 betreffend die Bremspedalsituation und den Betriebsbremsdruck. Die genannten Steuereinheiten 44, 46, 48, 52 stehen über einen CAN-Bus 54 mit einer CAN-Schnittstelle 56 der elektronischen Steuereinheit 10 in Verbindung. Über diese CAN-Schnittstele 56 kann den Mikrocontroller 18 über dessen CAN-Schnittstelle 58 eine Vielzahl von Eingangssignalen übermittelt werden. Ebenfalls können Ausgangsignale ausgegeben werden. Es kommen unter anderem die folgenden Eingangsignale in Frage:
- ES01:: Eine Anforderung für die Betätigung der elektrischen Feststellbremse
- ES02:: Die Fahrzeuggeschwindigkeit
- ES03:: Die Stellung des Gaspedals und ein Signal einer Abstandsregelung
- ES04:: Eine Bremspedalstellung
- ES05:: Ein Zustand der elektronischen Getriebesteuerung insbesondere im Hinblick auf eine Verzögerung
- ES06:: Der Zustand des Getriebes und der Kupplung, ausgegeben von der elektronischen Getriebesteuerung
- ES07:: Die Raddrehzahl
- ES08:: Der Zustand der elektronischen Motorsteuerung.

Als Ausgangssignale kommen insbesondere in Betracht:
- AS01:: Ein an die On-Board-Diagnose ausgegebenes auf die elektrische Feststellbremse bezogenes Zustandssignal
- AS02:: Eine Anforderung der elektronsichen Bremssteuerung im Hinblick auf eine Unterstützung der Betriebsbremse.

Neben der CAN-Schnittstelle 58 hat der Mikrocontroller 18 weiterhin direkte digitale und/oder analoge Ausgänge 60, insbesondere zum Ansteuern von Magnetspulen, die den Zugriff auf die pneumatische Steuerung vermitteln.

Die elektronische Steuereinheit 10 weist weiterhin Drucksensoren 62, 64, 66, 68 auf. Die Drucksensoren 62, 64 erfassen den Druck in den Betriebsbremskreisen. Der Drucksensor 66 ist der Anhängerbremsanlage zugeordnet. Der Drucksensor 68 dient der Messung des Drucks in den Federspeicherzylindern.

Es sind weitere Komponenten vorgesehen, die im Zusammenhang mit dem Betrieb der Handsteuereinheit 12 stehen und die mit Bezug auf die nachfolgende Beschreibung der Funktionsweise der Handsteuereinheit 12 und deren Zusammenspiel mit der elektronischen Steuereinheit 10 erläutert werden.

Die Handsteuereinheit 12 hat zwei Bedienelemente 14, 16. Das Bedienelement 14 dient dem Schließen der Feststellbremse durch Drücken, während das Bedienelement 16 dem Öffnen der Feststellbremse durch Ziehen dient. Zum Zwecke des Schließens der Feststellbremse ist das Bedienelement 14 an einen Schalter 70 gekoppelt. Wird dieser Schalter geschlossen, so wird ein Signal S1 an den Analog-Digital-Wandler 20 des Mikrocontrollers 18 ausgegeben. Zum Zwecke des Lösens der Feststellbremse ist das Bedienelement 16 mit dem Schalter 72 gekoppelt. Wird der Schalter 72 geschlossen, so wird ein Signal R1 an den Analog-Digital-Wandler 20 des Mikrocontrollers 18 ausgegeben.

Zusätzlich zu seiner Kopplung an den Schalter 70 ist das Betätigungselement 14 aber auch an den Schalter 74 gekoppelt. Dieser Schalter 74 dient der Erzeugung eines Aufwecksignals WUP, das ebenfalls an den Analog-Digital-Wandler 20 des Mikrocontrollers 18 ausgegeben wird. Das Aufwecksignal WUP wird aber auch einer Schmitt-Triggerschaltung 76 zugeführt. Das Ausgangssignal der Schmitt-Triggerschaltung 76 wird einer Schaltlogik 22 zugeführt, die immer dann ein Ausgangssignal ausgibt, wenn mindestens ein Eingangssignal vorliegt. Der Schaltlogik 22 wird weiterhin ein "Zündung-Ein"-Signal ZE zugeführt, das heißt im einfachsten Fall eine Spannung, die immer dann vorliegt, wenn die Zündung eingeschaltet ist. Das Ausgangssignal der Schaltlogik 22 nimmt Einfluss auf einen in dem Netzteil 28 integrierten Schalter 24. Liegen entweder das "Zündung-Ein"-Signal ZE oder das Aufwecksignal WUP vor, so wird der Schalter 24 geschlossen, so dass die Feststellbremsanlage und insbesondere der Mikrocontroller 18 mit einer Spannung versorgt werden. Die doppelte Versorgungsspannung 30 wird zu diesem Zwecke innerhalb des Netzteils 28 über ein Kopplungselement 78 zugeführt, das im allgemeinen dafür sorgt, dass die höhere Spannung der redundanten Spannungsversorgung 30 zur Versorgung der Feststellbremse herangezogen wird.

Ähnlich, wie dem Betätigungselement 14 neben der Kopplung an den Schalter 70 zum Schließen der Feststellbremsanlage der Schalter 74 zum Erzeugen des Aufwecksignals WUP zugeordnet ist, ist dem Betätigungselement 16 zum Lösen der Feststellbremse neben dem Schalter 72 der Schalter 80 zugeordnet. Beim Schließen dieses Schalter S80 wird ein Signal TEST erzeugt, das dem Analog-Digital-Wandler 20 des Mikrocontrollers 18 zugeführt wird, so dass auf dessen Grundlage geprüft werden kann, ob das Zugfahrzeug alleine in der Lage ist, den gesamten Zug, bestehend aus Zugfahrzeug und Anhänger, zu halten. Vorteilhafterweise kann der Schalter 80 auch als Redundanzschalter für den Schalter 72 dienen. Gleichermaßen kann der Schalter 74 als Redundanzschalter für den Schalter 70 herangezogen werden.

In der Handsteuereinheit 12 und der elektronischen Steuereinheit 10 sind weiterhin noch Widerstände R1, R2 R3, R4, R5, R6, R7 und R8 dargestellt, die so dimensioniert sind, dass dem Mikrocontroller 18 und der Schmitt-Triggerschaltung 76 die geeigneten Signale zugeführt werden. Beispielsweise wird durch das Schließen des Schalters 72 der damit verbundene Eingang des Analog-Digital-Wandlers 20 des Mikrocontrollers 18 über den Widerstand R1 mit Erde GND verbunden, so dass hierdurch ein Signal erzeugt wird. Beim Öffnen des Schalters 72 liegt der entsprechende Eingang wieder über den Widerstand R7 auf dem positiven Potential des Netzteils 28.

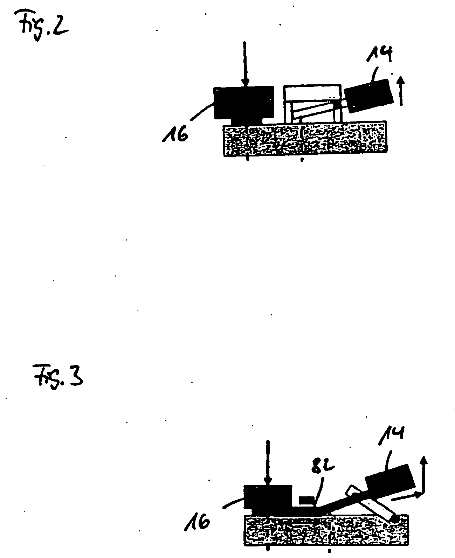

So wie bei der Ausführungsform gemäß Figur 1 die Feststellbremse durch Drücken geschlossen und durch Ziehen geöffnet wird, ist bei der Betätigungsvorrichtung gemäß Figur 2 vorgesehen, die Feststellbremse durch Ziehen des Betätigungselementes 14 zu schließen und durch Drücken des Betätigungselementes 16 zu öffnen.

Auch bei Figur 3 wird die Feststellbremse durch Ziehen des Betätigungselementes 14 geschlossen und durch Drücken des Betätigungselementes 16 geöffnet. Es ist zusätzlich ein Riegel 82 vorgesehen, der das Drükken des Betätigungselementes 16 verhindert, wenn nicht gleichzeitig das Betätigungselement 14 gezogen ist. Auf diese Weise wird ein Lösen der Feststellbremse nur dann möglich sein, wenn beide Betätigungselemente 14, 16 gleichzeitig betätigt werden. Dies schafft zusätzliche Sicherheit.

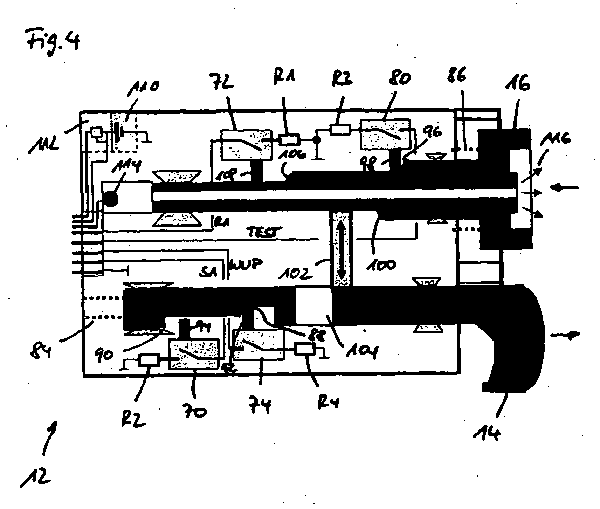

Figur 4 zeigt eine schematische Darstellung zur Erläuterung einer Handsteuereinheit, die im Rahmen der vorliegenden Erfindung zum Einsatz kommen kann. Die Handsteuereinheit 12 hat ein Betätigungselement 14, das Schaltfunktionen durch Ziehen auslöst, und ein Betätigungselement 14, das Schaltfunktionen durch Drükken auslöst. Das Betätigungselement 14 ist über eine Zugfeder 84 mit einem Gehäuse der Handsteuereinheit unmittelbar oder mittelbar verbunden. Das Betätigungselement 16 ist über eine Druckfeder 68 mit dem Gehäuse der Handsteuereinheit 12 mittelbar oder unmittelbar verbunden.

Eine Betätigung des Betätigungselementes 14 kann ohne weiteres erfolgen. Indem das Betätigungselement 14 gegen die Kraft der Zugfeder 84 gezogen wird, schließt zunächst der Schalter 74, so dass auf diese Weise das Signal WUP an den Mikrocontroller (siehe Figur 1) ausgegeben wird. Dieses Signal WUP dient im Falle einer ausgeschalteten Zündung als Aufwecksignal. Ebenfalls dient es als redundantes Signal zu dem nachfolgend durch weiteres Ziehen des Betätigungselementes 14 erzeugten Signals S1, das aufgrund des Schließens des Schalters 70 ein Schließen der Feststellbremse bewirkt. Die Betätigung der Schalter 74, 70 erfolgt durch entsprechende Abschrägungen 88, 90 am Betätigungselement 14, die auf federvorgespannte, den Schaltern 70, 74 zugeordnete Taster 92, 94 wirken.

Auch das Betätigungselement 16 kann zunächst ohne weiteres betätigt werden, nämlich indem es gegen die Kraft der Druckfeder 86 gedrückt wird. Die Abschrägung 96 des Betätigungselementes 16 betätigt den federvorgespannten Taster 28, so dass der Schalter 80 geschlossen wird. Somit kann die Anhänger-Test-Funktion ausgeführt werden. Soll das Betätigungselement 16 aber weiter bewegt werden, so stößt die Abschrägung 100 des Betätigungselementes 16 gegen eine Blockade, nämlich einen federzentrierten Gleitstein 102. Das Betätigungselement 16 kann somit nicht weiter bewegt werden. Erst durch gleichzeitiges Betätigen des Betätigungselementes 14 wird eine Öffnung 104 in dem Betätigungselement 14 so angeordnet, dass der Gleitstein 102 mit der Öffnung 104 fluchtet. Folglich kann die durch das Betätigungselement 16 auf den Gleitstein ausgeübte Kraft eine Verschiebung des Gleitsteins 102 in die Öffnung 104 bewirken. Nachdem diese Verschiebung erfolgt ist, kann das Betätigungselement 16 weiter gedrückt werden und aufgrund der Krafteinwirkung der Abschrägung 106 auf den federvorgespannten Taster 108 den Schalter 72 zum Öffnen der Feststellbremse betätigen. In Folge des Betätigens des Betätigungselementes 16 werden daher nacheinander die Signale TEST und R1 erzeugt, wobei es zur Erzeugung des Signals R1 nur nach mechanischer Freigabe des Gleitsteins 102 in Folge eines Herausziehens des Betätigungselementes 14 kommen kann.

Die Handsteuereinheit umfasst weiterhin optional einen Akkumulator 110 und eine zugeordnete Regeleinheit 112. Weiterhin ist optional eine LED 114 vorgesehen, die über einen sich in axiale Richtung des Betätigungselementes 16 erstreckenden Kanal Lichtsignale 116 ausgeben kann. Solche Lichtsignale können beispielsweise den Fahrer zum Ausführen der Anhängertestfunktion auffordern. Ebenfalls ist es denkbar, dass Warnsignale oder Statussignale über die Lichtsignale 116 ausgegeben werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: elektronische Steuereinheit
- 12: Handsteuereinheit
- 14: Betätigungselement zum Schließen der Feststellbremse
- 16: Betätigungselement zum Lösen der Feststellbremse
- 18: Mikrocontroller
- 20: Analog-Digital-Wandler
- 22: Schaltlogik
- 24: Schalter
- 26: Watchdogtimer
- 28: Netzteil
- 30: redundante Spannungsversorgung
- 32: Shut-Down-Relais
- 34: Feststellbremsepneumatik
- 36: Magnetventile
- 38: EAC-Pneumatikschnittstelle
- 40: Anhängersteuerungmodul
- 42: Federspeicherzylinder
- 44: elektronische Getriebesteuerung
- 46: elektronische Motorsteuerung
- 48: elektronische Bremssteuerung
- 50: Bremsdruckmodulator
- 52: zentrale elektronische Steuereinheit
- 54: CAN-Bus
- 56: CAN-Schnittstelle
- 58: CAN-Schnittstelle
- 60: direkte Ausgänge
- 62: Drucksensor
- 64: Drucksensor
- 66: Drucksensor
- 68: Drucksensor
- 70: Schalter
- 72: Schalter
- 74: Schalter
- 76: Schmitt-Triggerschaltung
- 78: Kopplungselement für Eingangsspannung
- 80: Schalter
- 82: Riegel
- 84: Zugfeder
- 86: Zugfeder
- 88: Schräge
- 90: Schräge
- 92: Taster
- 94: Taster
- 96: Schräge
- 98: Taster
- 100: Schräge
- 102: Gleitstein
- 104: Öffnung
- 106: Schräge
- 108: Taster
- 110: Akkumulator
- 112: Regler
- 114: Leuchtdiode
- 116: Lichtsignal

## Patentansprüche

1. Vorrichtung zum Steuern einer elektrischen Feststellbremse eines Nutzfahrzeugs mit
- einer elektronischen Steuereinheit (10) und
- einer mit der elektronischen Steuereinheit kommunizierenden Handsteuereinheit (12), über die von der Betätigungsart der Handsteuereinheit abhängige Fahrerwünsche an die elektronische Steuereinheit übermittelbar sind,
- wobei die elektronische Steuereinheit in der Weise ausgebildet ist, dass sie Signale der Handsteuereinheit weiterverarbeitet, wenn die Zündung des Nutzfahrzeugs eingeschaltet ist,
- wobei die Handsteuereinheit in der Weise ausgebildet ist, dass sie bei mindestens einer Betätigungsart ein Aufwecksignal (WUP) an einen Mikrocontroller (18) der elektronischen Steuereinheit (10) ausgibt, und
- wobei die elektronische Steuereinheit weiterhin in der Weise ausgebildet ist, dass sie im Anschluss an den Empfang eines Aufwecksignals mindestens ein weiteres Signal (S1) der Handsteuereinheit auch dann weiterverarbeitet, wenn die Zündung des Nutzfahrzeugs ausgeschaltet ist,
**dadurch gekennzeichnet,**
- **dass** durch das Aufwecksignal ein Einschalten einer Spannungsversorgung des Mikrocontrollers (18) veranlassbar ist, wobei das Aufwecksignal dem Mikrocontroller (18) über einen Analog-Digital-Wandler (20) und einer Schaltlogik (22) zuführbar ist,
- **dass** die elektronische Steuerung (10) in der Weise ausgelegt ist, dass der Schaltlogik neben dem Aufwecksignal ein "Zündung-Ein"-Signal (ZE) zuführbar ist,
- **dass** ein Ausgangssignal der Schaltlogik dann ein Schließen eines Schalters (24) zur Spannungsversorgung des Mikrocontrollers (18) veranlasst, wenn das Aufwecksignal und/oder das "Zündung-Ein"-Signal zugeführt werden, und
- **dass** ein Schließen des Schalters (24) zur Spannungsversorgung des Mikrocontrollers auch in Folge eines Ausgangssignals (NL) des Mikrocontrollers veranlassbar ist.

2. Vorrichtung nach Anspruch 1, **dadurch gekennzeichnet, dass** die Handsteuereinheit in der Weise ausgebildet ist, dass sie ein Aufwecksignal (WUP) ausgibt, wenn an der Handsteuereinheit (12) ein Betätigungselement (14) zum Schließen der Feststellbremse betätigt wird.

3. Vorrichtung nach Anspruch 1 oder 2, **dadurch gekennzeichnet, dass** die elektronische Steuereinheit (10) in der Weise ausgebildet ist, dass sie bei ausgeschalteter Zündung des Nutzfahrzeugs im Anschluss an den Empfang eines Aufwecksignals (WUP) genau ein weiteres Signal der Handsteuereinheit (12) weiterverarbeitet.

4. Vorrichtung nach Anspruch 3, **dadurch gekennzeichnet, dass** das weitere Signal ein Schließsignal (S1) zum Schließen der Feststellbremse ist.

5. Verfahren zum Steuern einer elektrischen Feststellbremse eines Nutzfahrzeugs mit einer elektronischen Steuereinheit (10) und einer mit der elektronischen Steuereinheit kommunizierenden Handsteuereinheit (12), über die von der Betätigungsart der Handsteuereinheit abhängige Fahrerwünsche an die elektronische Steuereinheit dann übermittelt werden, wenn die Zündung des Nutzfahrzeugs eingeschaltet ist,
- wobei die Handsteuereinheit bei mindestens einer Betätigungsart ein Aufwecksignal (WUP) an einen Mikrocontroller (18) der elektronischen Steuereinheit (10) ausgibt, und
- wobei die elektronische Steuereinheit weiterhin im Anschluss an den Empfang eines Aufwecksignals mindestens ein weiteres Signal (S1) der Handsteuereinheit auch dann weiterverarbeitet, wenn die Zündung des Nutzfahrzeugs ausgeschaltet ist,
**dadurch gekennzeichnet,**
- **dass** durch das Aufwecksignal ein Einschalten einer Spannungsversorgung des Mikrocontrollers (18) veranlasst wird, wobei das Aufwecksignal dem Mikrocontroller (18) über einen Analog-Digital-Wandler (20) und einer Schaltlogik (22) zugeführt wird,
- **dass** der Schaltlogik neben dem Aufwecksignal ein "Zündung-Ein"-Signal (ZE) zugeführt wird,
- **dass** ein Ausgangssignal der Schaltlogik dann ein Schließen eines Schalters (24) zur Spannungsversorgung des Mikrocontrollers (18) veranlasst, wenn das Aufwecksignal und/oder das "Zündung-Ein"-Signal zugeführt werden, und
- **dass** ein Schließen des Schalters (24) zur Spannungsversorgung des Mikrocontrollers auch in Folge eines Ausgangssignals (NL) des Mikrocontrollers veranlasst wird.

6. Verfahren nach Anspruch 5, **dadurch gekennzeichnet, dass** die Handsteuereinheit ein Aufwecksignal (WUP) ausgibt, wenn an der Handsteuereinheit (12) ein Betätigungselement (14) zum Schließen der Feststellbremse betätigt wird.

7. Verfahren nach Anspruch 5 oder 6, **dadurch gekennzeichnet, dass** die elektronische Steuereinheit (10) bei ausgeschalteter Zündung des Nutzfahrzeugs im Anschluss an den Empfang eines Aufwecksignals (WUP) genau ein weiteres Signal der Handsteuereinheit (12) weiterverarbeitet.

8. Verfahren nach Anspruch 7, **dadurch gekennzeichnet, dass** das weitere Signal ein Schließsignal (S1) zum Schließen der Feststellbremse ist.

## Claims

1. Device for controlling an electric parking brake of a commercial vehicle having
- an electronic control unit (10) and
- a manual control unit (12) which communicates with the electronic control unit and by means of which driver requests which are dependent on the type of activation of the manual control unit can be transmitted to the electronic control unit,
- wherein the electronic control unit is designed in such a way that it further processes signals of the manual control unit if the ignition of the commercial vehicle is switched on,
- wherein the manual control unit is designed in such a way that in at least one type of activation it outputs a wakeup signal (WUP) to a microcontroller (18) of the electronic control unit (10), and
- wherein the electronic control unit is further designed in such a way that, subsequent to the reception of a wakeup signal, it further processes at least one further signal (S1) of the manual control unit even when the ignition of the commercial vehicle is switched off,
**characterised in that**
- the wakeup signal can cause a voltage supply of the microcontroller (18) to be switched on, wherein the wakeup signal can be fed to the microcontroller (18) via an analogue/digital converter (20) and a switching logic (22),
- **in that** electronic control unit (10) is configured in such a way that, in addition to the wakeup signal, an "ignition on" signal (ZE) can be fed to the switching logic,
- **in that** an output signal of the switching logic then causes a switch (24) for supplying voltage to the microcontroller (18) to close when the wakeup signal and/or the "ignition on" signal is/are supplied, and
- **in that** the switch (24) for supplying voltage to the microcontroller can also be made to close as a result of an output signal (NL) of the microcontroller.

2. Device according to claim 1, **characterised in that** the manual control unit is designed in such a way that it outputs a wakeup signal (WUP) if an activation element (14) for closing the parking brake is activated on the manual control unit (12).

3. Device according to claim 1 or 2, **characterised in that** the electronic control unit (10) is designed in such a way that, when the ignition of the commercial vehicle is switched off, it further processes precisely one further signal of the manual control unit (12) subsequent to the reception of a wakeup signal (WUP).

4. Device according to claim 3, **characterised in that** the further signal is a closing signal (S1) for closing the parking brake.

5. Method for controlling an electric parking brake of a commercial vehicle having an electronic control unit (10) and a manual control unit (12) which communicates with the electronic control unit and by means of which driver requests which are dependent on the type of activation of the manual control unit are transmitted to the electronic control unit when the ignition of the commercial vehicle is switched on,
- wherein the manual control unit outputs a wakeup signal (WUP) to a microcontroller (18) of the electronic control unit (10) in at least one type of activation, and
- wherein subsequent to the reception of a wakeup signal, the electronic control unit continues to further process at least one further signal (S1) of the manual control unit even when the ignition of the commercial vehicle is switched off,
**characterised in that**
- the wakeup signal causes the voltage supply of the microcontroller (18) to switch on, wherein the wakeup signal is fed to the microcontroller (18) via an analogue/digital converter (20) and a switching logic (22),
- **in that**, in addition to the wakeup signal, an "ignition on" signal (ZE) is fed to the switching logic,
- **in that** an output signal of the switching logic then causes a switch (24) for supplying voltage to the microcontroller (18) to close when the wakeup signal and/or the "ignition on" signal is/are supplied, and
- **in that** the switch (24) for supplying voltage to the microcontroller is also made to close as a result of an output signal (NL) of the microcontroller.

6. Method according to claim 5, **characterised in that** the manual control unit outputs a wakeup signal (WUP) if an activation element (14) for closing the parking brake is activated on the manual control unit (12).

7. Method according to claim 5 or 6, **characterised in that** the electronic control unit (10), when the ignition of the commercial vehicle is switched off, further processes precisely one further signal of the manual control unit (12) subsequent to the reception of a wakeup signal (WUP).

8. Method according to claim 7, **characterised in that** the further signal is a closing signal (S1) for closing the parking brake.

## Revendications

1. Dispositif de commande d'un frein électrique de stationnement d'un véhicule utilitaire, comprenant
- une unité (10) électronique de commande et
- une unité (12) de commande manuelle, qui communique avec l'unité électronique de commande et par laquelle des souhaits du conducteur, qui dépendent du type d'actionnement de l'unité de commande manuelle, peuvent être transmis à l'unité électronique de commande,
- dans lequel l'unité électronique de commande est telle qu'elle traite des signaux de l'unité de commande manuelle si l'allumage du véhicule utilitaire est mis en en circuit,
- dans lequel l'unité de commande manuelle est telle qu'elle émet, pour au moins un type d'actionnement, un signal (WUP) de mise en éveil vers un microcontrôleur (18) de l'unité (10) électronique de commande et
- dans lequel l'unité électronique de commande est, en outre, telle qu'elle traite, à la suite de la réception d'un signal de mise en éveil, au moins un autre signal (S1) de l'unité de commande manuelle même si l'allumage du véhicule utilitaire est mis hors circuit,
**caractérisé**
- **en ce que** l'application d'une alimentation en tension du microcontrôleur (18) peut être provoquée par le signal de mise en éveil, le signal de mise en éveil pouvant être envoyé à un microcontrôleur (18) par un convertisseur (20) analogique-numérique et par une logique (22) de circuit,
- **en ce que** la commande (20) électronique est conçue de telle façon qu'outre le signal de mise en éveil, un signal (ZE) "allumage mis en circuit" peut être envoyé à la logique de circuit et
- **en ce qu'**un signal de sortie de la logique de circuit provoque alors la fermeture d'un interrupteur (24) pour l'alimentation en tension du microcontrôleur (18), lorsque le signal de mise en éveil et/ou le signal "allumage mis en circuit" sont envoyés et
- **en ce qu'**une fermeture de l'interrupteur (24) pour l'alimentation en tension du microcontrôleur peut être provoquée aussi à la suite d'un signal (NL) de sortie du microcontrôleur.

2. Dispositif suivant la revendication 1, **caractérisé en ce que** l'unité de commande manuelle est telle qu'elle émet un signal (WUP) de mise en éveil, lorsque sur l'unité (12) de commande manuelle un élément (14) d'actionnement est actionné pour serrer le frein de stationnement.

3. Dispositif suivant la revendication 1 ou 2, **caractérisé en ce que** l'unité (10) électronique de commande est telle qu'elle traite exactement un autre signal de l'unité (12) de commande manuelle, lorsque l'allumage du véhicule utilitaire est mis hors circuit à la suite de la réception d'un signal (WUP) de mise en éveil.

4. Dispositif suivant la revendication 3, **caractérisé en ce que** l'autre signal est un signal (S1) de serrage du frein de stationnement.

5. Procédé de commande d'un frein électrique de stationnement d'un véhicule utilitaire comprenant une unité (10) électronique de commande et une unité (12) de commande manuelle, qui communique avec une unité électronique de commande et par laquelle les souhaits du conducteur qui dépendent du type de fonctionnement de l'unité de commande manuelle sont transmis à l'unité électronique de commande lorsque l'allumage du véhicule utilitaire est mis en circuit
- dans lequel l'unité de commande manuelle émet, pour au moins un type d'actionnement, un signal (WUP) de mise en éveil vers un microcontrôleur (18) de l'unité (10) électronique de commande et
- dans lequel l'unité électronique de commande traite, en outre, à la suite de la réception d'un signal de mise en éveil, au moins un autre signal (S1) de l'unité de commande manuelle même si l'allumage du véhicule utilitaire est mis hors circuit,
**caractérisé**
- **en ce que** l'application d'une tension d'alimentation du microcontrôleur (18) est provoquée par le signal de mise en éveil, le signal de mise en éveil pouvant être envoyé à un microcontrôleur (18) par un convertisseur (20) analogiquenumérique et par une logique (22) de circuit,
- **en ce que** la commande (20) électronique est conçue de telle façon qu'outre le signal de mise en éveil, un signal (ZE) "allumage mis en circuit" peut être envoyé à la logique de circuit,
- **en ce qu'**un signal de sortie de la logique de circuit provoque alors la fermeture d'un interrupteur (24) pour l'alimentation en tension du microcontrôleur (18), lorsque le signal de mise en éveil et/ou le signal "allumage mis en circuit" sont envoyés et
- **en ce qu'**une fermeture de l'interrupteur (24) pour l'alimentation en tension du microcontrôleur peut être provoquée aussi à la suite d'un signal (NL) de sortie du microcontrôleur.

6. Procédé suivant la revendication 5, **caractérisé en ce que** l'unité de commande manuelle émet un signal (WUP) de mise en éveil lorsque sur l'unité (12) de commande manuelle un élément (14) d'actionnement est actionné pour tirer le frein de stationnement.

7. Procédé suivant la revendication 5 ou 6, **caractérisé en ce que** l'unité (10) électronique de commande traite lorsque l'allumage du véhicule utilitaire est mis en circuit à la suite de la réception d'un signal (WUP) de mise en éveil exactement à un autre signal de l'unité (12) de commande manuelle.

8. Procédé suivant la revendication 7, **caractérisé en ce que** l'autre signal est un signal (S1) de serrage du frein de stationnement.
